# EUROPEAN PATENT APPLICATION

(11) **EP 4 336 166 A1**
(43) Date of publication of application: **13.03.2024**
(21) Application number: 22863982.9
(22) Date of filing: 08.06.2022
(51) Int. Cl.: G01N 1/28, G02B 21/34

(54) **MOUNTING DEVICE**

(30) Priority: 30.08.2021 JP 2021140156
(71) Applicant: SAKURA SEIKI CO., LTD., Chikuma-shi Nagano 387-0015 (JP); SAKURA FINETEK JAPAN CO., LTD., Chuo-ku Tokyo 103-0023 (JP)
(72) Inventor: MIMURA, Masahisa, Chikuma-shi, Nagano 387-0015 (JP); OKADA, Hoshinosuke, Chikuma-shi, Nagano 387-0015 (JP); KOMIYAMA, Kazuki, Chikuma-shi, Nagano 387-0015 (JP); HASHIZUME, Daiki, Chikuma-shi, Nagano 387-0015 (JP)
(74) Representative: Purdylucey Intellectual Property
(86) International application number: PCT/JP2022/023073
(87) International publication number: WO 2023/032394

(57) **Abstract**

A sealing apparatus is provided that enables a sealing agent bottle to be replaced with input of an inappropriate sealing agent prevented, and a cover slip, a sealing agent, and a clearing agent appropriately combined. A sealing apparatus (10) includes a starting bath (22) in which a clearing agent is stored and a slide glass (12) on which a specimen before the sealing is attached is dipped in the clearing agent, a sealing agent bottle (44) that stores a sealing agent dispensed onto the slide glass (12) taken out from the starting bath (22), and includes a recording unit (62) in which at least a type of the sealing agent is recorded, a storage unit (68) storing information on compatibility of the clearing agent with respect to a cover slip (26) and the sealing agent currently applied, and a control unit (66) that performs, when the sealing agent bottle (44) is replaced, control of determining the compatibility of the sealing agent read from the recording unit (62) with respect to the cover slip (26) and the clearing agent stored in the storage unit (68), and at least when the result of the determination is incompatible, making a notification unit (20) issue a notification indicating the incompatibility.

## Description

### Technical Field

The present invention relates to a sealing apparatus.

### Background Art

A pathological specimen is prepared as follows. Specifically, a specimen such as a tissue or cell collected from humans, animals, and the like is embedded, sliced, and attached and dyed on a slide glass. Then, a cover slip that is a cover film or a cover glass is stuck on the slide glass with the specimen provided in between to seal the specimen. Thus, a pathological specimen for microscopic observation is prepared. There has been known a sealing apparatus that presses or sticks the cover slip on the specimen disposed on the slide glass to seal the specimen in this process (see PTL 1: JP-A-2018-25512).

In the sealing apparatus, the cover slip is stuck on the slide glass using an adhesive. The adhesive may be contained in a sealing agent dispensed onto the slide glass at the time of sealing, or may be previously applied to the cover slip. In the latter case, the sealing agent contains a solvent dissolving the adhesive. When the sealing agent is dispensed onto the slide glass and then the cover slip is pressed, the sealing agent dissolves the adhesive applied to the cover slip, and thus the cover slip is stuck.

In the sealing apparatus, the slide glass before the sealing is dipped in a clearing agent, and is taken out from the clearing agent and conveyed to a sealing position at the time of sealing. The clearing agent includes one that provides an effect of dissolving the adhesive applied to the cover slip, in addition to the effects of preventing the drying and maintaining the favorable dyed state of the specimen. Thus, in the sealing apparatus, the cover slip is stuck on the slide glass with the specimen sandwiched in between, with an appropriate combination among the type of the cover slip (the adhesive is applied or not for example), the type of the sealing agent (whether the adhesive is contained or the solvent is contained for example), and the type of the clearing agent (how much the adhesive can be dissolved for example).

### Citation List

### Patent Literature

PTL 1: JP-A-2018-25512

### Summary of Invention

### Technical Problem

The sealing apparatus includes a sealing agent bottle that stores the sealing agent to be dispensed onto the slide glass, and the bottle is entirely replaced with a new bottle when the sealing agent runs short. Thus, sealing agent is replenished/replaced. With a conventional configuration, the sealing agent bottle may be erroneously replaced with a bottle storing a sealing agent of a type different from the sealing agent running short. Such an erroneous input of the sealing agent may lead to sealing failure of the specimen causing drying, deterioration, and damaging of the specimen due to the incompatibility among the cover slip, the sealing agent, and the clearing agent, and thus may result in the compromised quality of the pathological specimen.

Furthermore, there is a risk of deterioration and failure of the sealing apparatus, due to the use of the sealing agent the compatibility of which with respect to the sealing apparatus has not been confirmed and the use of inappropriate sealing agent.

### Solution to Problem

The present invention is made in view of the above, and an object of the present invention is to provide a sealing apparatus with which the replacement of sealing agent bottle prevented from resulting in erroneous input of the sealing agent, and an appropriate combination among the cover slip, the sealing agent, and the clearing agent can be achieved.

The present invention achieves the above object by the solution as an embodiment as described below.

A sealing apparatus according to the present invention is configured to stick a cover slip that is a cover film or a cover glass on a specimen disposed on a slide glass to seal the specimen, and includes: a starting bath in which a clearing agent is stored and the slide glass on which the specimen before the sealing is attached is accommodated to be dipped in the clearing agent; a sealing agent bottle that is configured to store a sealing agent to be dispensed onto the slide glass taken out from the starting bath, and includes a recording unit in which at least a type of the sealing agent stored is recorded; a storage unit configured to store information on compatibility between types of the cover slip and the clearing agent currently applied and a type of the sealing agent; and a control unit configured to perform control of determining, when the sealing agent bottle is replaced, whether the type of the sealing agent read from the recording unit is compatible with the types of the cover slip and the clearing agent currently applied, stored in the storage unit, and making, when a result of the determination is incompatible, a notification unit issue a notification indicating the incompatibility.

With this configuration, replacement of the sealing agent bottle is prevented from resulting in the input of an inappropriate sealing agent, and the sealing agent compatible with the cover slip and the clearing agent currently applied can be reliably replenished.

Preferably, an expiry date of the sealing agent stored in the sealing agent bottle is recorded in the recording unit, and the control unit performs, when the sealing agent bottle is replaced, control of comparing the expiry date read from the recording unit with a current date based on a calendar function to determine whether the current date is after the expiry date, and of making, when at least the current date is after the expiry date, the notification unit issue a notification indicating that the expiry date is in past. With this configuration, input of deteriorated sealing agent after the expiry date can be prevented.

In a preferable configuration, a reading mechanism configured to read information recorded in the recording unit is provided, wherein the reading mechanism is provided to a lid portion configured to close the sealing agent bottle, and the information becomes readable from the recording unit when the sealing agent bottle is closed by the lid portion. In an alternative preferable configuration, a reading mechanism configured to read information recorded in the recording unit is provided, wherein the reading mechanism is provided in a predetermined position in periphery of the sealing agent bottle, and the information becomes readable from the recording unit when the sealing agent bottle is disposed in the sealing apparatus. In an alternative preferable configuration, a reading mechanism configured to read information recorded in the recording unit is provided, wherein the reading mechanism is placed on a base where the sealing agent bottle is placed, and the information becomes readable from the recording unit when the sealing agent bottle is placed on the base. With these configurations, the sealing agent bottle can be reliably disposed in the predetermined position in the sealing apparatus, when the sealing agent bottle is replaced.

### Advantageous Effects of Invention

With the present invention, replacement of the sealing agent bottle is prevented from resulting in the input of an inappropriate sealing agent, and the sealing agent compatible with the cover slip and the clearing agent can be reliably replenished.

### Brief Description of Drawings

Fig. 1 is a schematic view illustrating an example of a sealing apparatus according to an embodiment of the present invention, and is a front view in which the internal is partially visible, Fig. 1 illustrating an example where a cover film is applied as a cover slip.
Figs. 2A and 2B are explanatory views illustrating an example where a cover glass is applied as the cover slip in the sealing apparatus illustrated in Fig. 1, Fig. 2A being a perspective view illustrating an example where the cover glass is accommodated in a holder, Fig. 2B being a schematic view illustrating an example of a periphery of a sealing position as viewed from above.
Figs. 3A to 3C are schematic views (perspective views) illustrating an example of a periphery of a sealing agent bottle in the sealing apparatus illustrated in Fig. 1, Fig. 3A illustrating an example where a reading mechanism is provided to a lid portion that closes the sealing agent bottle, Fig. 3B illustrating an example where the reading mechanism is provided in the periphery of the sealing agent bottle, Fig. 3C illustrating an example where the reading mechanism is provided to a base on which the sealing agent bottle is placed.
Fig. 4 is a block diagram illustrating an example of a control mechanism related to replacement of the sealing agent bottle in the sealing apparatus illustrated in Fig. 1.
Fig. 5 is a flowchart illustrating an example of a control operation related to the replacement of the sealing agent bottle in the sealing apparatus illustrated in Fig. 1.
Fig. 6 is a flowchart illustrating another example of the control operation related to the replacement of the sealing agent bottle in the sealing apparatus illustrated in Fig. 1.

### Description of Embodiments

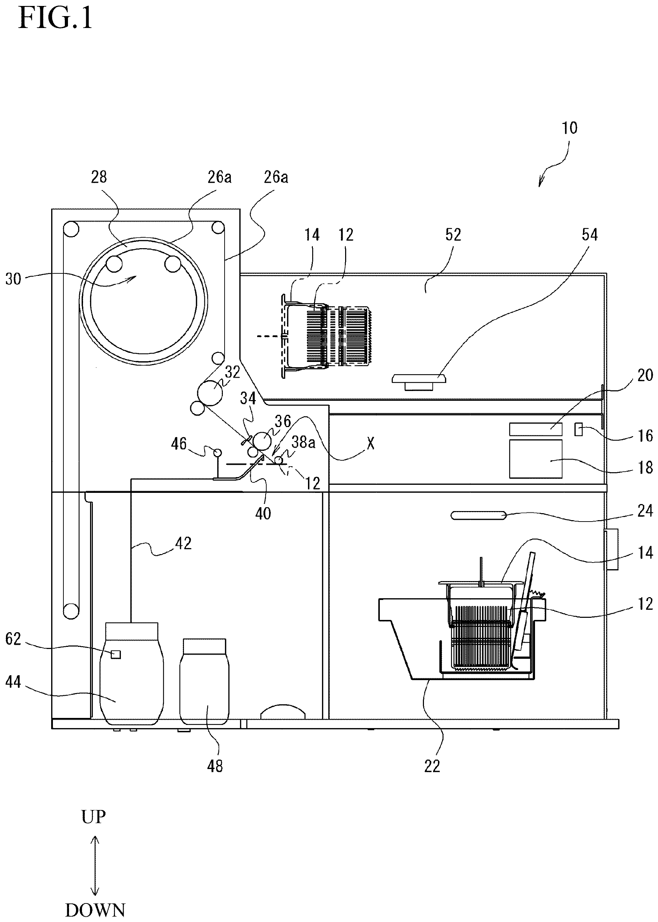

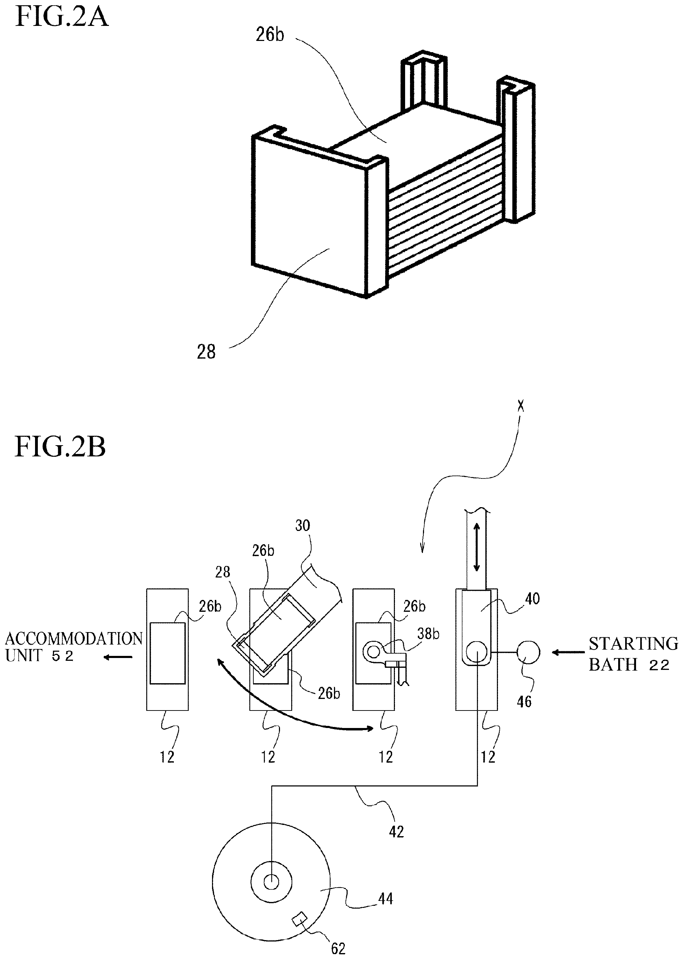

An embodiment of the present invention will be described below with reference to the drawings. The upward-downward direction illustrated in the drawings is assumed to match the direction of gravity. Fig. 1 is a schematic view illustrating an example of a sealing apparatus 10 according to the first embodiment, and is a front view in which the internal is partially visible. In the illustrated example, a cover film 26a is applied as a cover slip 26. On the other hand, Figs. 2A and 2B are explanatory views illustrating an example where a cover glass 26b is applied as the cover slip 26 in the sealing apparatus 10 illustrated in Fig. 1.

As illustrated in Fig. 1, the sealing apparatus 10 according to the present invention includes, on the front surface of the apparatus 10, as an external configuration, a power switch 16, an operation panel that is one operation unit 18 for performing an input for registration, setting, operator operation, and the like, and a display panel that is one notification unit 20 for notifying the user of information. In the present embodiment, a buzzer is provided, in addition to the display panel, as the notification unit 20 in the apparatus 10.

The sealing apparatus 10 according to the present invention further includes, as an internal configuration, a starting bath 22 that is an dipping bath containing a clearing agent. A basket 14 accommodates a predetermined number (10 or 20 for example) of slide glasses 12 on which a specimen after dyeing that is a pre-process for pathological specimen preparation is attached. The slide glasses 12 are accommodated in the starting bath 22 together with the basket 14, to be dipped in the clearing agent.

The clearing agent provides effects of preventing the drying of the specimen and maintaining a favorable dyed state. The clearing agent provides an effect of dissolving an adhesive previously applied to the cover slip 26 for sticking the cover slip 26 on the slide glass 12. An example of such a clearing agent includes an organic solvent such as xylene.

The starting bath 22 is configured to be attachable and detachable to and from the sealing apparatus 10, and is conveyed by the user to a predetermined portion in the sealing apparatus 10 through a starting bath door 24 provided in the front surface of the apparatus 10, while accommodating the basket 14 (that is, the slide glasses 12). Alternatively, the sealing apparatus 10 may be coupled to a dyeing apparatus (not illustrated), and the starting bath 22 accommodating the basket 14 may be configured to be automatically conveyed into the sealing apparatus 10 using a conveyance apparatus (not illustrated), from the dyeing apparatus.

The sealing apparatus 10 includes a take-out mechanism (not illustrated) that takes out the basket 14 from the starting bath 22 and a conveyance mechanism (not illustrated) that conveys the basket 14 taken out from the starting bath 22. With these mechanisms, the basket 14 is conveyed to the predetermined position in the apparatus 10. The sealing apparatus 10 further includes a conveyance mechanism (not illustrated) that conveys the slide glass 12 from the basket 14. With this mechanism, the slide glasses 12 are conveyed to a sealing position X in the apparatus 10 one by one.

The sealing apparatus 10 further includes a mounting portion 30 to which the cover film 26a that is the cover slip 26 is mounted via a holder 28. The cover film 26a is a long (about 60 m for example) sheet (transparent or semitransparent sheet made of resin for example), and is wound around the holder 28. With the holder 28 rotatably mounted to the mounting portion 30, the cover film 26a can be drawn by rotating the holder 28. The cover film 26a drawn from the holder 28 is fed toward the downstream side through a pair of feed rollers 32. The cover film 26a is cut in a predetermined length by a cutter 34 provided on the downstream side of the feed rollers 32, and is then fed to the sealing position X through a pair of cover rollers 36. With a sticking roller 38a as a sealing unit 38 provided at the sealing position X, the cover film 26a is pressed against the slide glass 12 disposed at the sealing position X with the specimen provided in between.

On the other hand, as illustrated in Figs. 2A and 2B, when the cover glass 26b is applied as the cover slip 26, the holder 28 accommodates a stack of a plurality of (about 100 to 300 for example) the cover glasses 26b, each formed in advance to have a predetermined length for use (Fig. 2A). The mounting portion 30 to which the holder 28 is mounted can be pivoted by a predetermined angle together with the holder 28 about a pivot shaft (Fig. 2B). Thus, the cover glass 26b accommodated in the holder 28 is disposed below a suction pad 38b that is the sealing unit 38 provided at the sealing position X and is configured to be vertically movable. As a result, when the suction pad 38b moves down, holds the upper surface of the cover glass 26b by suction, and then further moves downward, the cover glass 26b is pressed against the slide glass 12 disposed below, with the specimen provided in between.

A dispensing nozzle 40 from which a sealing agent is dispensed onto the slide glass 12 (that is, the specimen) is provided at the sealing position X. The dispensing nozzle 40 is connected to a sealing agent bottle 44 storing the sealing agent and a pump 46, through a dispensing pipe 42. Thus, the dispensing nozzle 40 discharges the sealing agent sucked from the sealing agent bottle 44. With a distal end portion disposed above the specimen on the slide glass 12 disposed at the sealing position X, the dispensing nozzle 40 can dispense the sealing agent onto the specimen. The sealing agent overflowed from the slide glass 12 is stored in a waste liquid bottle 48 via a waste liquid tray (not illustrated).

For example, the sealing agent contains an adhesive for sticking the cover slip 26 to the slide glass 12. In this case, when the cover slip 26 is pressed against the slide glass 12 on which the sealing agent has been dispensed, the cover slip 26 is stuck by the adhesive in the sealing agent. As another example, the sealing agent contains a solvent that dissolves the adhesive. In this case, when the cover slip 26 is pressed against the slide glass 12 on which the sealing agent has been dispensed, the sealing agent dissolves the adhesive applied to the cover slip 26, and thus the cover slip 26 is stuck. While the cover slip 26 of a type with the adhesive previously applied to the cover film 26a is popular, the adhesive may be applied to the cover glass 26b. As the solvent-containing sealing agent, the agent (such as xylene for example) that is the same as the clearing agent may be used.

Depending on products, the adhesive-containing sealing agent may be referred to as "sealing agent" and the solvent-containing sealing agent may be referred to as "sealing aid agent" for the sake of distinction, or the adhesive applied to the cover slip 26 may also be referred to as "sealing agent". Anyway, regardless of the various ways of naming, with an appropriate combination among the type of the cover slip 26 (whether the adhesive is applied, for example), the type of sealing agent (whether the adhesive is contained or whether the solvent is contained), and the type of clearing agent (how much the adhesive can be dissolved), the specimen can be sealed in the sealing apparatus 10, with the cover slip 26 stuck on the slide glass 12 with the specimen provided in between.

The slide glass 12 after the completion of the sealing is conveyed by the conveyance mechanism (not illustrated) to be accommodated in the basket 14 which is the original location (Fig. 1) or to be accommodated in another basket 14 (Figs. 2A and 2B, in which the basket 14 is not illustrated). When all the slide glasses 12 in the basket 14 are sealed and then accommodated again in the basket 14, the conveyance mechanism (not illustrated) stores the basket 14 in an accommodation unit 52 provided at a predetermined position in the apparatus 10.

The accommodation unit 52 is configured to be openable and closable by an opening-closing cover 54, so that the user can take out the slide glasses 12 after the sealing, from the apparatus 10 together with the basket 14.

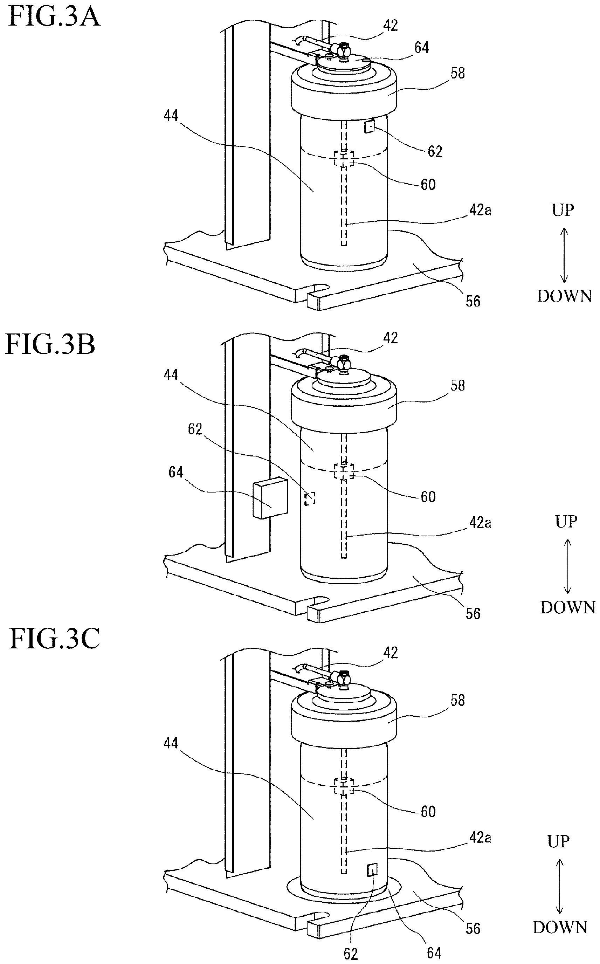

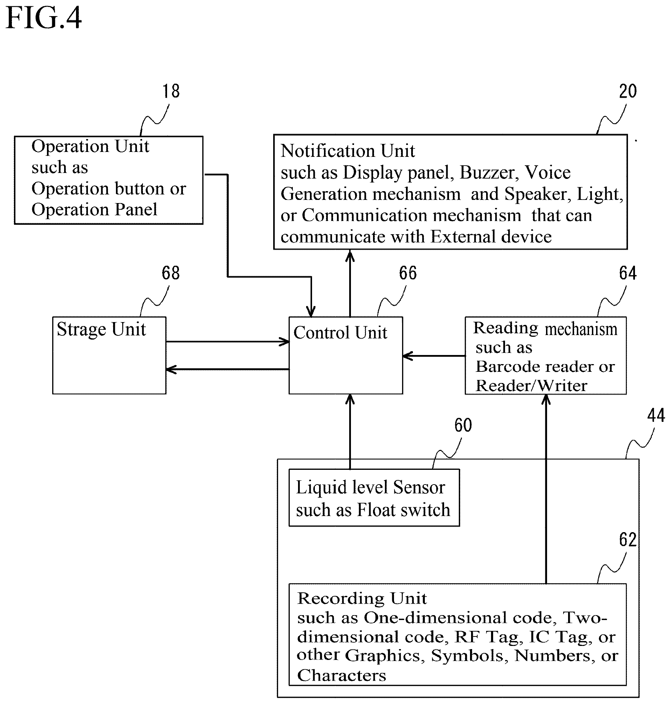

Next, the sealing agent bottle 44 which is a feature of the present embodiment and a peripheral configuration thereof will be described with reference to Figs. 3A to 3C. A reference is also made on the block diagram illustrated in Fig. 4 as appropriate. As illustrated in Figs. 3A to 3C, the sealing agent bottle 44 is provided in the sealing apparatus 10 while being placed on a base 56. The base 56 is a floor on which the sealing agent bottle 44 is placed. The sealing agent bottle 44 is closed by a lid portion 58, and thus the sealing agent is prevented from vaporizing. The dispensing pipe 42 has one end 42a inserted into the sealing agent bottle 44 through the lid portion 58. The one end 42a of the dispensing pipe 42 is provided with a liquid level sensor 60 that detects the liquid level of the sealing agent in the sealing agent bottle 44, so that the whether the sealing agent is sufficient or is running short can be detected. The liquid level sensor 60 the configuration of which is not limited may be a known float switch or the like for example. In this case, when the sealing agent is sufficient, a float switch ON signal is transmitted to a control unit 66, and when the sealing agent runs short, the float switch is turned OFF and the float switch ON signal stops.

Here, the sealing agent bottle 44 is provided with a recording unit 62 in which at least the type of sealing agent stored in the sealing agent bottle 44 is recorded. On the other hand, the sealing apparatus 10 is provided with a reading mechanism 64 that is configured to read information recorded in the recording unit 62, and transmit a read information signal to the control unit 66 provided at a predetermined position in the apparatus 10 as illustrated in Fig. 4. Thus, when the sealing agent bottle 44 is replaced, the type of the sealing agent after the replacement (replenishment) can be recognized. Furthermore, a storage unit 68 provided at a predetermined position in the apparatus 10 stores information on compatibility among the type of the cover slip 26, the type of the sealing agent, and the type of the clearing agent, currently applied. The compatibility information is, for example, an appropriate combination pattern of the cover slip 26, the sealing agent, and the clearing agent registered and stored in the storage unit 68 in advance through an input on the operation unit 18 or the like at the beginning of use of the sealing apparatus 10 (installation of the sealing apparatus 10). Thus, for the type of the sealing agent recognized using the recording unit 62, the control unit 66 can check the compatibility information for the currently applied cover slip 26 and clearing agent stored in the storage unit 68, and make a determination on the compatibility between these, whereby whether the sealing agent has been replenished/replaced appropriately can be determined. As a result, erroneous input of a sealing agent is prevented, and an appropriate combination among the cover slip 26, the sealing agent, and the clearing agent can be achieved.

In the recording unit 62, the expiry date of the sealing agent may be recorded in addition to the type of the sealing agent. Thus, the expiry date of the replaced (replenished) sealing agent can be recognized when the sealing agent bottle 44 is replaced. Furthermore, the control unit 66 can compare the expiratory date recognized using the recording unit 62 with the current date based on a calendar function, to determine whether the current date is after the expiratory date. As a result, the deteriorated sealing agent after the expiry date can be prevented from being input, whereby the sealing failure of the specimen as well as the resultant drying, deterioration, and damaging of the specimen can be reliably prevented. Thus, the quality of the pathological specimen can be more reliability prevented from compromising.

The configuration, the position, and the number of the recording units 62 are not limited. For example, a predetermined number of recording units 62, configured by a recording medium or the like such as a barcode as one-dimensional code, a two-dimensional code example of which including a matrix code and a stack code, an RF tag, or an IC tag, or other graphics, symbols, numbers, or characters may be provided at a predetermined position of the sealing agent bottle 44. Among these, a production identification code of an international standard such as GTIN (JAN code) which is provided to many produces, may be used as the recording unit 62. Such a recoding unit 62 may be configured in any way as long as the desired information can be obtained based on the information recorded therein. Thus, a configuration in which the desired information is directly recorded in the recording unit 62 should not be construed in a limiting sense, and a configuration may be employed in which the desired information associated with the information recorded in the recording unit 62 is stored in advance in the storage unit 68, and the desired information is obtained using the storage unit 68. The configuration, the position, and the number of the reading mechanisms 64 for the recording unit 62 are not limited. For example, a barcode reader, a reader/writer, or the like may be provided in accordance with the configuration of the recording unit 62.

As an example of the arrangement of the recording unit 62 and the reading mechanism 64, a configuration as illustrated in Fig. 3A may be employed, in which the recording unit 62 is provided in a relatively upper portion such as a shoulder portion of the sealing agent bottle 44, and the reading mechanism 64 is provided to the lid portion 58, so that the information can be read from the recording unit 62 when the sealing agent bottle 44 is closed by the lid portion 58. Alternatively, a configuration as illustrated in Fig. 3B may be employed in which the recording unit 62 is provided in a side surface portion (at a height to be in any of upper, lower, and center portion) of the sealing agent bottle 44, and the reading mechanism 64 is provided in a predetermined position (any position) in the periphery of the sealing agent bottle 44, so that the information can be read from the recording unit 62 when the sealing agent bottle 44 is provided in the sealing apparatus 10. Furthermore, a configuration may be employed in which the recording unit 62 is provided in a relatively lower portion (which may be the side surface portion or bottom surface portion) of the sealing agent bottle 44 and the reading mechanism 64 is provided on the base 56, so that the information can be read from the recording unit 62 when the sealing agent bottle 44 is placed on the base 56. With such examples, the information can be read from the recording unit 62 once the sealing agent bottle 44 is appropriately disposed. Thus, the sealing agent bottle 44 can be reliably disposed at a predetermined position in the sealing apparatus 10, at the time of replacement. As a result, the vaporization of the sealing agent can be reliably prevented with the sealing agent bottle 44 reliably closed by the lid portion 58. Furthermore, the specimen can be reliably sealed, using an appropriate amount of sealing agent reliably sucked through the dispensing pipe 42 and dispensed onto the slide glass 12.

Note that the communication between the reading mechanism 64 and the control unit 66 is not limited to a wired mode, and may be wirelessly performed. Thus, the reading mechanism 64 does not necessarily need to be fixed to or connected using wire to the sealing apparatus 10, and thus can be provided as an independent device. For example, the reading mechanism 64 may be a dedicated portable device, or may be formed by adding the reading function to other items example of which including a portable communication device such as a smartphone and a tablet. Furthermore, a configuration may be employed in which the reading mechanism 64 is not provided, and the user directly inputs the number or the like for identifying the type of the sealing agent on the operation unit 18 (tenkey on the operation panel for example) to make the control unit 66 recognize the type of the sealing agent stored in the sealing agent bottle 44.

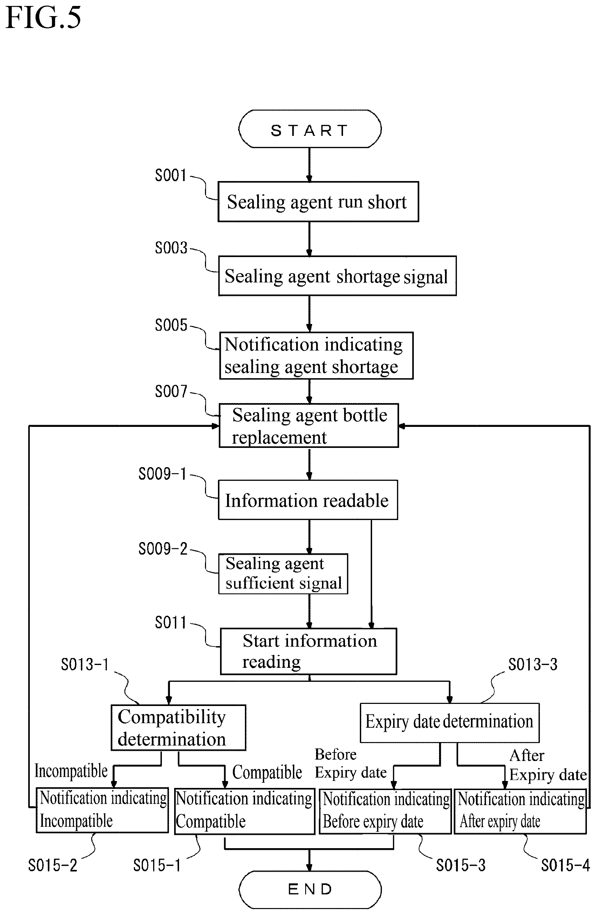

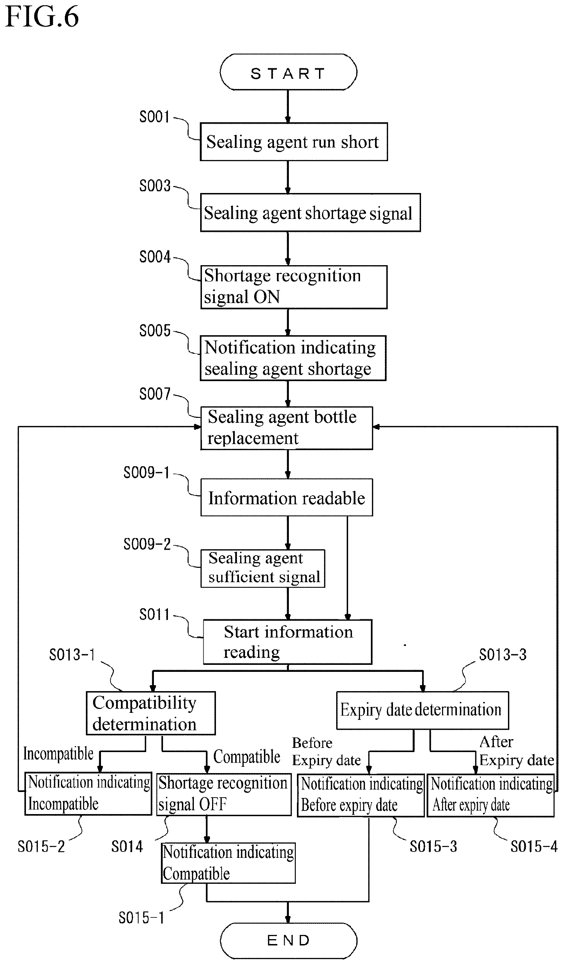

Next, a control operation related to the replacement of the sealing agent bottle 44 in the sealing apparatus 10 according to the present embodiment will be described with reference to the block diagram illustrated in Fig. 4 and flowcharts in Figs. 5 and 6. The control unit 66 according to the present embodiment includes a CPU and a memory, and operates based on an operation program set in advance and a setting signal input from the operation unit 18. As START, first of all, as illustrated in Fig. 5, when the sealing agent in the sealing agent bottle 44 runs short (S001), the liquid level sensor 60 transmits a sealing agent shortage signal (for example float switch OFF) to the control unit 66 (S003). Upon receiving the signal, the control unit 66 recognizes that the sealing agent is running short and performs control to make the notification unit 20 issue the notification, immediately or when a predetermined condition (the pump 46 continuously operates for a certain period of time for example) is satisfied (S005). The notification mode of the notification unit 20 according to the present embodiment is display on the display panel on the front surface of the apparatus 10 and a buzzer sound from the buzzer in the apparatus 10 (the same applies in the following), but is not limited to these. For example, a voice guidance using a voice generation mechanism and a speaker, light flashing, blinking, or the like, or a communication mechanism that can communicate with external devices may be employed. The communication mechanism in this case is connected to a communication line such as the Internet to be capable of performing data communications, and can issue the notification to an external device connected to the communication line. The external device includes a dedicated external device, a portable communication device such as a smartphone or a tablet, a general personal computer, and the like.

Upon receiving the notification, the user then replaces the sealing agent bottle 44 (S007). When the new sealing agent bottle 44 is appropriately disposed, the information can be read from the recording unit 62 (S009-1). When the new sealing agent bottle 44 is closed by the lid portion 58 and the one end 42a of the dispensing pipe 42 is inserted into the sealing agent, the sealing agent shortage signal from the liquid level sensor 60 (for example, float switch OFF) changes to a sealing agent sufficient signal (for example, float switch ON) and is transmitted to the control unit 66 (S009-2). Upon receiving the signal, the control unit 66 starts reading the information from the recording unit 62 using the reading mechanism 64 (S011). The control may be performed to start the reading as soon as the information becomes readable, or the control may be performed to start the reading when the sealing agent sufficient signal is received.

In a case of a configuration in which the information is read in response to the user holding the reading mechanism 64 against the recording unit 62 or the like, instead of a configuration in which the information is automatically read from the recording unit 62 using the reading mechanism 64 fixed to the sealing apparatus 10 in a state where the sealing agent bottle 44 is disposed in the sealing apparatus 10, the control unit 66 reads the information from the recording unit 62 in response to the operation on the reading mechanism 64 by the user as described above (S011). Thus, with such a configuration, the notification unit 20 may issue a notification inducing the operation of the reading mechanism 64 as described above.

Next, the control unit 66 performs determination related to the compatibility and expiry date of the sealing agent, based on the information read from the recording unit 62 (S013). Specifically, the control unit 66 determines whether the type of the sealing agent read from the recording unit 62 is compatible with the types of the cover slip 26 and the clearing agent currently applied, stored in the storage unit 68 (S013-1). When the result of the determination indicates compatible, the notification indicating compatible is issued from the notification unit 20 (S015-1). When the result of the determination indicates incompatible, the notification indicating incompatible is issued from the notification unit 20 (S015-2).

The control unit 66 compares the expiry date of the sealing agent read from the recording unit 62 with the current date based on the calendar function, to determine whether the current date is after the expiry date (S013-3). Then, control is performed in such a manner that when the current date is before the expiry date, the notification indicating such a fact is issued from the notification unit 20 (S015-3), and when the current date is after the expiry date, the notification indicating such a fact is issued from the notification unit 20 (S015-4).

When the sealing agent is compatible and the expiry date has not been exceeded yet, the replenishment of the sealing agent is completed (END). On the other hand, when the sealing agent is incompatible (S015-2) or when the expiry date has been exceeded (S015-4), the user receives the notification and performs the replacement again using another sealing agent bottle 44 (S007). Then, the control unit 66 performs the determination again for the sealing agent (S013).

In this manner, according to the present embodiment, the sealing agent compatible with the cover slip 26 and the clearing agent currently applied, and is before the expiry date can be reliably replenished by the replacement of the sealing agent bottle 44. As a result, the sealing failure as well as the resultant drying, deterioration, and damaging of the specimen due to the use of incompatible sealing agent, deteriorated sealing agent, or the like can be prevented. Furthermore, the deterioration and failure of the sealing apparatus 10 can be prevented.

Note that the notification may not necessarily be issued for the sealing agent that is compatible and is before the expiry date. The order of the determination and the notification (S013-1, S015-1, 2) for the compatibility of the sealing agent and the determination and the notification (S013-3, S015-3, 4) for the expiry date of the sealing agent is not particularly limited. Thus, any one of these may be performed earlier or later than the other, or these may be concurrently performed.

As another example, as illustrated in Fig. 6, a configuration may be employed in which the sealing operation does not start until the newly replenished sealing agent is confirmed to be compatible and is before the expiry date, before or after the replacement of the sealing agent in response to the sealing agent running short. Specifically, for example, the control unit 66 upon receiving the sealing agent shortage signal (S003) turns ON a shortage recognition signal to restrict the sealing operation (S004). Then, the sealing agent bottle 44 is replaced (S007), and the control unit 66 upon determining that the newly replenished sealing agent is compatible and is before the expiry date (S013) turns OFF the shortage recognition signal so that the sealing operation can start (S014), and makes the notification unit 22 issue a notification indicating the fact (S015-1, 3). Thus, the use of the incompatible sealing agent, the deteriorated sealing agent, or the like can be more reliably prevented.

As described above, with the sealing apparatus according to the present invention, the replacement of the sealing agent bottle is prevented from resulting in erroneous input of the sealing agent, and an appropriate combination of the cover slip, the sealing agent, and the clearing agent can be achieved.

The present invention is not limited to the embodiments described above, and can be modified in various ways without departing from the present invention.

## Claims

1. A sealing apparatus configured to stick a cover slip that is a cover film or a cover glass on a specimen disposed on a slide glass to seal the specimen, the sealing apparatus comprising:
a starting bath in which a clearing agent is stored and the slide glass on which the specimen before the sealing is attached is accommodated to be dipped in the clearing agent;
a sealing agent bottle that is configured to store a sealing agent to be dispensed onto the slide glass taken out from the starting bath, and includes a recording unit in which at least a type of the sealing agent stored is recorded;
a storage unit configured to store information on compatibility between types of the cover slip and the clearing agent currently applied and a type of the sealing agent; and
a control unit configured to perform control of determining, when the sealing agent bottle is replaced, whether the type of the sealing agent read from the recording unit is compatible with the types of the cover slip and the clearing agent currently applied, stored in the storage unit, and making, when a result of the determination is incompatible, a notification unit issue a notification indicating the incompatibility.

2. The sealing apparatus according to claim 1, wherein
an expiry date of the sealing agent stored in the sealing agent bottle is recorded in the recording unit, and
the control unit performs, when the sealing agent bottle is replaced, control of comparing the expiry date read from the recording unit with a current date based on a calendar function to determine whether the current date is after the expiry date, and of making, when at least the current date is after the expiry date, the notification unit issue a notification indicating that the expiry date is in past.

3. The sealing apparatus according to claim 1 or 2 further comprising a reading mechanism configured to read information recorded in the recording unit, wherein
the reading mechanism is provided to a lid portion configured to close the sealing agent bottle, and
the information becomes readable from the recording unit when the sealing agent bottle is closed by the lid portion.

4. The sealing apparatus according to claim 1 or 2 further comprising a reading mechanism configured to read information recorded in the recording unit, wherein
the reading mechanism is provided in a predetermined position in periphery of the sealing agent bottle, and
the information becomes readable from the recording unit when the sealing agent bottle is disposed in the sealing apparatus.

5. The sealing apparatus according to claim 1 or 2 further comprising a reading mechanism configured to read information recorded in the recording unit, wherein
the reading mechanism is placed on a base where the sealing agent bottle is placed, and
the information becomes readable from the recording unit when the sealing agent bottle is placed on the base.
